# EUROPÄISCHE PATENTSCHRIFT

(11) **EP 3 287 680 B1**
(45) Veröffentlichungstag und Bekanntmachung des Hinweises auf die Patenterteilung: **29.01.2020**
(21) Anmeldenummer: 17193078.7
(22) Anmeldetag: 14.04.2011
(51) Int. Cl.: F16K 37/00, G05B 23/02

(54) **VERFAHREN ZUM BESTIMMEN EINER BETRIEBSPOSITION EINES AUF/ZU-VENTILS UND FELDGERÄT**
METHOD FOR DETERMINING AN OPERATING POSITION OF AN OPEN/CLOSED VALVE AND FIELD DEVICE
PROCÉDÉ DE DÉTERMINATION D'UNE POSITION DE FONCTIONNEMENT D'UNE SOUPAPE TOUT OU RIEN ET APPAREIL DE TERRAIN

(30) Priorität: 20.04.2010 DE 102010015647
(43) Veröffentlichungstag der Anmeldung: 28.02.2018
(62) Teilanmeldung aus: 11003168.9
(73) Patentinhaber: Samson Aktiengesellschaft, 60314 Frankfurt am Main (DE)
(72) Erfinder: Kiesbauer, Jörg, 64859 Eppertshausen (DE); Unland, Stefan, 63065 Offenbach (DE)
(74) Vertreter: Schmid, Nils T.F.

(56) Entgegenhaltungen:
- DE-A1-102008 062 290
- DE-B3- 10 303 889
- US-A- 4 976 144

## Beschreibung

Die Erfindung betrifft ein Verfahren zum Bestimmen einer Betriebsposition eines durch einen pneumatischen Stellantrieb gestellten Auf/Zu-Ventils. Das sogenannte Auf/Zu-Ventil wird im allgemeinen Sprachgebrauch auch als Sicherheitsventil bezeichnet, das in den meisten Ausführungen eine vollständig geschlossene oder vollständig geöffnete Position einnehmen kann, bei der die Arbeitskammer des pneumatischen Stellantriebs pneumatisch beaufschlagt ist. Bei der vollen Beaufschlagung der Arbeitskammer drückt der pneumatische Arbeitsdruck einen Arbeitskolben des Stellantriebs entgegen einem Kraftspeicher, wie einer Stelldruckfeder, in eine vorbestimmte Anschlagsposition, welcher ein Ventilglied des Auf/Zu-Ventils entweder in die vollständig geöffnete Position oder vollständig geschlossene Position zu drängen sucht.

Das Ventilglied ist mit dem Arbeitskolben über eine Schwenk- und/oder Translationsmimik, insbesondere über eine Stellwelle oder Stellstange, starr gekoppelt. Kommt es zu einer unvorhergesehenen Notsituation, veranlasst ein einfach arbeitendes Anlagen-Feldgerät ohne Stellungs- oder Positionsregelung bestehend aus dem pneumatischen Stellantrieb und dem Auf/Zu-Ventil insbesondere für eine petrochemische Anlage, eine chemische Großanlage, eine Anlage der Pharmaindustrie, der Stahlerzeugung und der Zementherstellung, eine Müllverbrennungsanlage, Gießereien etc., nämlich ein mit der Arbeitskammer des Stellantriebs pneumatisch gekoppelter Strom-Druck-Wandler (i/p-Wandler) eine Pneumatikdruckbefreiung oder Entlüftung der Arbeitskammer des pneumatischen Stellantriebs, wodurch die gespeicherte potentielle Federenergie innerhalb des pneumatischen Stellantriebs abgegeben und das Ventilglied des Auf/Zu-Ventils in die Sicherheitsposition verfahren wird.

Im Hinblick auf die vom Anlagenbetreiber geforderte Gewährleistung einer hohen Betriebsicherheit ist es notwendig, solche Anlagen-Feldgeräte oder Sicherheitsventile regelmäßig auf Funktion zu überprüfen. Dabei ist festzustellen, ob und wie in Folge der Notentlüftung des pneumatischen Stellantriebs das Ventilglied tatsächlich in die Sicherheitsposition verfährt und/oder ob es beispielsweise in Folge einer Verschleißhaftung des Ventilglieds in dessen Ausgangsposition zu lange oder sogar unbeweglich verharrt.

Es ist bekannt, die vorbestimmte Sicherheitsposition des Auf/Zu-Ventils mittels eines sogenannten insbesondere elektrischen Positionssignalgebers zu überprüfen, der nur bei Einnehmen der Sicherheitsposition ein entsprechendes elektrisches Stellungssignal abgibt und damit das erwartete Einnehmen der Sicherheitsposition durch das Ventilglied signalisiert. Es zeigte sich, dass, um eine hohe Funktionssicherheit des Auf/Zu-Ventils zu garantieren, es geboten ist, den zeitlichen Verfahrweg in die Sicherheitsposition zu kennen. Ist denn beispielsweise das Einnehmen einer vorbestimmten Stellung zeitlich stark verzögert, könnte dies ein Hinweis auf einen bestehenden oder zumindest einsetzenden Verschleißschaden des Anlagen-Feldgeräts sein, dem sämtliche oder nur einzelne mechanische, elektrische Funktionsteile des Anlagen-Feldgeräts unterworfen sein könnten.

Eine Vorrichtung und ein Verfahren zum diagnostischen Testen und Bestimmen des Betriebszustands eines pneumatisch betriebenen Ventils sind aus US 4,976,144 bekannt.

Bei bekannten Anlagen-Feldgeräten mit ausschließlicher Auf/Zu-Ventilfunktion sind zur Positionserfassung des Ventilglieds mechanische Sensor-Einrichtungen eingesetzt, die ein direktes Positionsabgreifen am Ventilglied oder an einem starr mit dem Ventilglied gekoppelten Bauteil der Stellmechanik des Auf/Zu-Ventils oder des Stellantriebs realisieren. Im Hinblick auf eine hohe Prüfgenauigkeit für das Anlagen-Feldgerät ist es wünschenswert, eine direkte Stellungssensorik so nah wie möglich an dem Ventilglied zu positionieren, um eine fehlerhafte Positionsermittlung aufgrund des Versagens eines Kupplungsglieds der mechanischen Kette zwischen dem Stellantrieb und dem Ventilglied auszuschließen. Ein Nachteil dieser proximalen, direkten Stellungserfassung besteht darin, dass viele solcher Anlagen-Feldgeräte mit einfacher Auf/Zu-Ventilfunktion in prozesstechnischen Anlagen eingesetzt werden sollen, für die strenge Explosionsschutzauflagen gelten. Ein elektrisches Potential in der Nähe eines explosionsgefährlichen Anlagen-Prozessfluids ist zu minimieren, wenn nicht gänzlich zu vermeiden. Des Weiteren wirkt sich bei einer Anordnung der Positionssensorik in der Nähe des Ventilglieds eine häufige Temperaturänderung negativ auf die Messergebnisse insofern aus, als die Positionssensoren vor Auslieferung der Stellarmatur an Kunden üblicherweise bei

Raumtemperatur eingestellt und kalibriert werden. Im Einsatz an das Prozessmedium führenden Leitungen herrschen in der Regel wesentlich höhere oder tiefere Temperaturen, so dass die Sensoren anschließend mit einigem Aufwand nachjustiert werden müssen.

Es ist Aufgabe der Erfindung, die Nachteile des Stands der Technik zu überwinden, insbesondere eine verbesserte Diagnosemöglichkeit für das Einnehmen einer vorbestimmten Stellung eines Auf/Zu-Ventils zu bieten, wobei der messtechnische und mechanische Aufwand dafür gering gehalten werden sollen und insbesondere bei Verwendung höchstens einer einzigen, insbesondere elektrischen Sensorik eine abschließende zuverlässige Aussage über die tatsächliche Stellung des Ventilglieds des Auf/Zu-Ventils treffbar ist.

Diese Aufgabe wird durch die Merkmale von Patentanspruch 1 gelöst. Danach ist ein Verfahren zum Bestimmen einer Betriebsposition eines durch einen pneumatischen Stellantrieb gestellten Auf/Zu-Ventils vorgesehen. Der pneumatische Stellantrieb ist vorzugsweise ein Schwenkantrieb, wobei auch ein translatorischer Stellantrieb verwendet werden kann. Das durch den pneumatischen Stellantrieb und das Auf/Zu-Ventil gebildete Anlagen-Feldgerät wird in einer prozesstechnischen Anlage, wie einer petrochemischen Anlage, einer chemischen Großanlage, einer Anlage der Pharmaindustrie, der Stahlerzeugung und der Zementherstellung, einer Müllverbrennungsanlage, Gießereien, oder dergleichen, eingesetzt. Die vorbestimmte Funktionsweise des Auf/Zu-Ventils mit oder ohne zusätzlicher Stellungsregelung lässt ausschließlich eine vollständig geöffnete Auf-Stellung und eine geschlossene Zu-Stellung zu, in der ein Ventilglied einen Durchfluss durch einen Ventilsitz in einer Prozessfluidleitung der Anlage sperrt.

Das in der Anlage zu verarbeitende Prozessfluid kann explosiv sein, so dass hohe elektrische Potentiale in dessen Nähe vermieden oder zumindest verschwindend gering gehalten sind. Im Normalbetrieb des pneumatischen Stellantriebs wird eine Arbeitskammer des Antriebs über einen i/p-Wandler pneumatisch beaufschlagt, so dass das Auf/Zu-Ventil in eine der beiden Auf/Zu-Stellungen verfährt.

Vorzugsweise ist dies die vollständig geöffnete Auf-Stellung. Im Falle einer vorbestimmten Betriebssituation, insbesondere in einem Notfall, wie einem Stromausfall, insbesondere in dem betreffenden Teil der Anlage, entlüftet der i/p-Wandler die Arbeitskammer insbesondere auf Atmosphärendruck, so dass das Auf/Zu-Ventil in die andere Auf/Zu-Stellung verfährt.

Vorzugsweise ist dies die vollständig geschlossene Zu-Stellung. Erfindungsgemäß soll nun die Funktionsweise des Auf/Zu-Ventils inklusive des pneumatischen Stellantriebs diagnostiziert werden, indem der in der Arbeitskammer herrschende pneumatische Druck und/oder der am i/p-Wandler abgegebene pneumatische Steuerdruck kontinuierlich im Zeitverlauf erfasst werden. Es zeigte sich, dass die erfasste Druckänderung im zeitlichen Verlauf ein messtechnisches Maß für eine physikalische Verfahrgröße des Auf/Zu-Ventils ist, insbesondere inwieweit das Auf/Zu-Ventil erwartungsgemäß von der einen Auf/Zu-Stellung in die andere gelangt ist, wie lange es gedauert hat, bis das Auf/Zu-Ventil in die betreffende Auf/Zu-Stellung seit der ersten Änderung des pneumatischen Zuluftdrucks in der Arbeitskammer (Verfahrzeit oder Laufzeit des Auf/Zu-Ventils) gelangt ist, und/oder welchen Gesamtstellweg das Auf/Zu-Ventil ab der ersten Druckänderung zurückgelegt hat. Die Verfahrzeit kann einen eindeutigen Rückschluss darüber geben, ob sich beispielsweise ein unzulässiger Verschleiß an der Stellarmatur eingestellt hat. Ist die Verfahrzeit erhöht, so ist beispielsweise von einer erhöhten internen Reibung an der Stellarmatur auszugehen. Auch der Stellweg kann diagnostisch dazu genutzt werden, um zu prüfen, ob tatsächlich die gewünschten Auf/Zu-Stellung eingenommen worden ist oder nicht.

Anhand der erfassten zeitlichen Druckänderung können also überraschenderweise direkte Rückschlüsse auf die Stellung des Auf/Zu-Ventils sowie dessen Stellungsverlauf abhängig von der Zeit gezogen werden. Auf der Basis dieses Rückschlusses kann eine zuverlässige diagnostische Aussage über die Funktionsweise des Auf/Zu-Ventils beim Einnehmen jeder gewünschten Stellung getroffen werden. Denn die Erfindung bedient sich einer Erkenntnis, dass sowohl der Abbau des pneumatischen Arbeitsdrucks in der Arbeitskammer als auch der Aufbau des Arbeitsdrucks in der Arbeitskammer im zeitlichen Verlauf einen charakteristischen, überprüfbaren und vor allem anlagenfeldgerät- oder ventilspezifischen Messparameter darstellen, durch welchen eindeutige Positions- oder Wegangaben sowie Abweichungen von der erwarteten Position im zeitlichen Verlauf ermittelt werden können. Um das Ventilglied in eine der Auf/Zu-Positionen zu verbringen, sind Stellwiderstände zu überwinden, die sich insbesondere durch die feldgeräteigene Reibung der Stellmechanik und/oder durch die am Ventilglied herrschenden Strömungskräfte des Prozessfluids der prozesstechnischen Anlage ergeben, die eine Verlagerung des Auf/Zu-Ventils erschweren oder unterstützen können. Es stellte sich heraus, dass für die meisten Auf/Zu-Ventile die Widerstandskräfte insofern vereinheitlichbar oder abstrahierbar sind, als ein von der Stellung des Ventilglieds abhängiger und vorbestimmbarer Kraftaufwand notwendig ist, um das Ventilglied des Auf/Zu-Ventils zwischen den Auf/Zu-Positionen hin und her zu bewegen.

Es ist der in der Arbeitskammer herrschende und erfasste pneumatische Druck, der den tatsächlichen notwendigen Kraftaufwand zur Überwindung der den Zustand des Anlagen-Feldgeräts widerspiegelnden Widerstandskraft repräsentiert. Erfindungsgemäß wird festgestellt, ob ein üblicher, erwarteter, also vorbekannter Kraftaufwand aufgebracht werden muss oder nicht, um den Positionswechsel des Auf/Zu-Ventils zu erreichen. Sollte ein darüber hinausgehender Überdruck erfasst sein, ist mit großer Wahrscheinlichkeit von einem Schaden des Feldgeräts, insbesondere der Stellmechanik des pneumatischen Stellantriebs und/oder des Auf/Zu-Ventils, oder einer unzulässigen Reibungserhöhung wegen Verschleiß auszugehen. Sollte ein gegenüber dem erwarteten Druck wesentlich geringerer pneumatischer Druck erfasst werden, so kann davon ausgegangen werden, dass beispielsweise ein Bruch einer Stellstange zwischen Stellantrieb und Ventilglied vorliegt. Der erfasste Unterdruck und Überdruck kann die Abgabe eines Fehlersignals durch die Auswertelektronik auslösen.

Beispielsweise kann die zeitliche Druckänderung beim pneumatischen Druckbeaufschlagen der Arbeitskammer, also beim Verfahren in die Betriebsposition des Auf/Zu-Ventils ermittelt werden. Alternativ oder zusätzlich kann der zeitliche Druckverlauf auch während des Entlüftens ermittelt werden, um die Mechanik des Verfahrens des Auf/Zu-Ventils zu überprüfen.

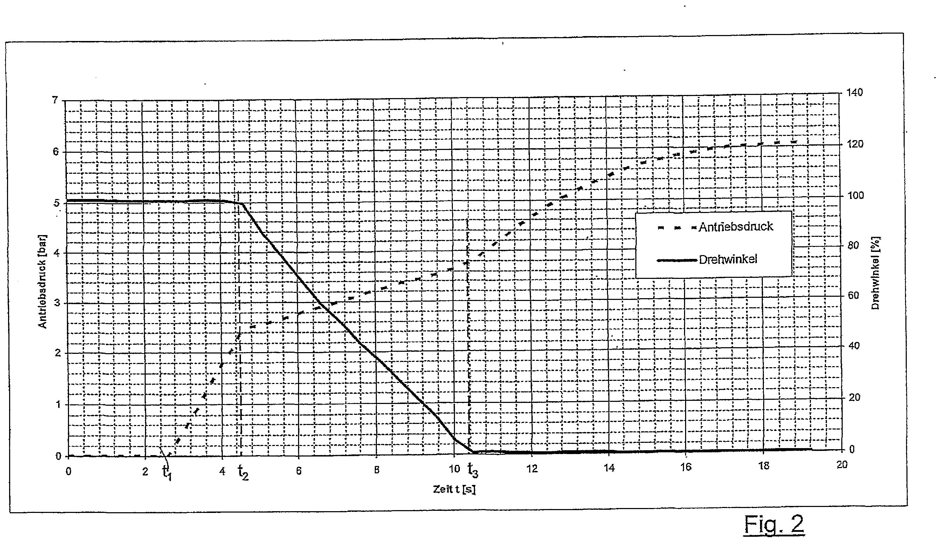

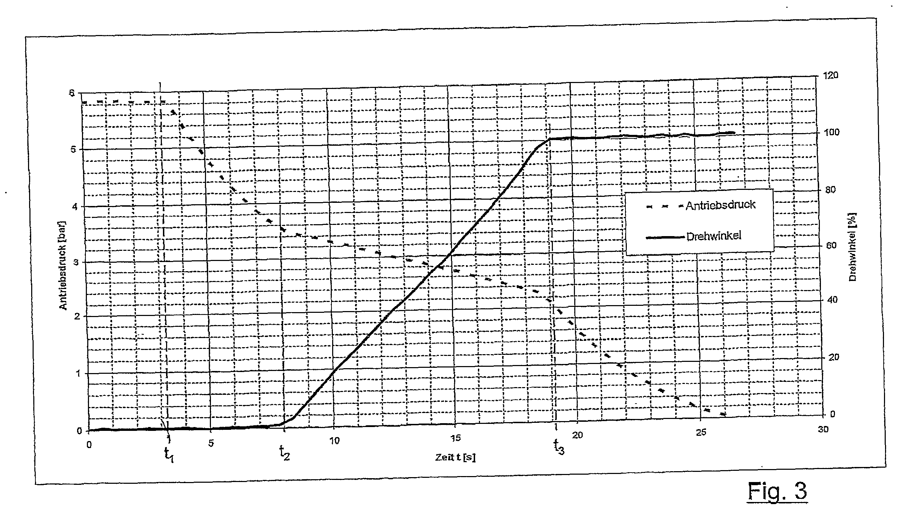

Bei einer bevorzugten Ausführung der Erfindung hat das Auf/Zu-Ventil ausschließlich eine vollständig geöffnete Auf-Stellung und eine vollständig geschlossene Zu-Stellung ohne weitere individuell ansteuerbare Zwischenstellungen. Eine Stellungsregelung ist bei dem bevorzugten erfindungsgemäßen Verfahren nicht vorgesehen. Bei einem nicht beanspruchten Verfahren wird der zeitliche Verlauf der erfassten Ist-Druckänderung mit einem auf insbesondere ventilspezifischen Erfahrungswerten basierenden zeitlichen Solldruckverlauf vorzugsweise eines fehlerfrei arbeitenden durchschnittlichen Auf/Zu-Ventils verglichen. Bei einer Abweichung der erfassten Ist-Druckänderung von dem Solldruckverlauf kann ein Fehlersignal erzeugt und insbesondere angezeigt werden. Dieser Werte-Vergleich kann in unmittelbarer Nähe zum Feldgerät, insbesondere in dem Auf/Zu-Ventil, vorzugsweise innerhalb des Gehäuses des pneumatischen Stellantriebs oder innerhalb eines an dem Stellantriebsgehäuse des pneumatischen Stellantriebs befestigten, gekapselten Gehäuses einer elektrischen Auswerteeinheit, durchgeführt werden. Allerdings kann der Wertevergleich auch an der distalen Leitwarte vorgenommen werden. Vorzugsweise ist eine vorbestimmte Abweichtoleranz für den erfassten Ist-Druckverlauf bezüglich des vorab gespeicherten Soll-Druckverlaufs definiert, wobei bei Überschreitung der vorbestimmten Abweichtoleranz durch den erfassten Ist-Druck ein Fehlersignal ausgelöst wird.
Des Weiteren können die Druckwerte, insbesondere der zeitliche Druckänderungsverlauf, dazu genutzt werden, die Momentanstellung des Auf/Zu-Ventils während des Verfahrens in die jeweilige Position zu bestimmen, was bei Beachtung der Figuren 2 und 3 leicht verständlich ist.
Bei einer bevorzugten Ausführung der Erfindung wird das Erfassen des pneumatischen Drucks im Zeitverlauf, insbesondere eine Funktionsdiagnose des Auf/Zu-Ventils, dann initiiert, wenn eine Druckänderung, insbesondere ein Druckabfall und/oder ein Druckanstieg erfasst wird. Die Diagnose wird automatisch bei Erfassung der Druckänderung initiiert.
Bei einer bevorzugten Ausführung der Erfindung wird die Stellungsänderung, insbesondere die Momentanstellung je Zeiteinheit, des Auf/Zu-Ventils anhand der erfassten Druckänderung errechnet und hergeleitet. Bevor tatsächlich die Stellungsänderung, insbesondere die Momentanstellung, des Auf/Zu-Ventils bestimmt wird, wird vorher insbesondere die erfasste Druckänderung daraufhin überprüft, ob sie sich innerhalb der vorbestimmten Abweichungstoleranz bezüglich des vorbestimmten Soll-Druckverlaufs befindet oder nicht. Insbesondere nur in dem Fall, dass sich die erfasste Druckänderung innerhalb der vorbestimmten Abweichungstoleranz befindet, wird die Stellungsänderung, insbesondere die Momentanstellung, des Auf/Zu-Ventils bestimmt.

Bei einer bevorzugten Ausführung der Erfindung wird die über die erfasste Druckänderung hergeleitete Stellungsinformation dazu genutzt, eine Stellungsregelungsroutine für den pneumatischen Stellantrieb auszuführen. Dabei kann eine Nachregelung des pneumatischen Drucks oder Zuluftdrucks innerhalb der pneumatischen Arbeitskammer des Stellantriebs vorgesehen werden. Es sei insbesondere klar, dass für diese Stellungsregelung keine direkt erfassten Positionssignale beispielsweise mit einem Hall-Sensor herangezogen werden brauchen.

Bei einer Weiterbildung der Erfindung wird eine Diagnose auf Funktion der Bewegungsmimik des Auf/Zu-Ventils initiiert, indem der Ist-Druckänderungsverlauf mit einem Soll-Druckänderungsverlauf verglichen wird.

Vorzugsweise wird das erfindungsgemäße Verfahren ohne eine direkt Positionserfassung des Auf/Zu-Ventils, beispielsweise ohne eine Einrichtung zum Abgreifen der Positionsänderung eines Bauteils der Stellmechanik, wie einem Hall-Sensor, durchgeführt.

Bei einer Weiterbildung der Erfindung wird ein vom Normalbetrieb und der vorbestimmten Betriebsposition unabhängiges Testsignal dem i/p-Wandler mitgeteilt, das eine Teilverlagerung des Auf/Zu-Ventils von der einen in die andere Auf/Zu-Stellung (Partial Stroke) und wieder zurück in die eine Ausgangsstellung veranlasst, um insbesondere die Funktionstüchtigkeit des Feldgeräts, vorzugsweise des Auf/Zu-Ventils, zu überprüfen.

Bei einer bevorzugten Ausführung der Erfindung wird eine Bewertung des Druck-Zeitverlaufs sowie die zeitliche Ableitung des ermittelten Arbeitsdrucks dazu genutzt, einen

Betriebspunkt oder einen optimalen Arbeitsbereich des pneumatischen Stellantriebs zu bestimmen. Dieser Betriebspunkt oder Arbeitsbereich kann dadurch bestimmt werden, dass ein Ansprechzeitpunkt oder -stelldruck ermittelt wird, also ab welchem Stelldruck oder Zeitpunkt eine bestimmte Verlagerung des Stellglieds, insbesondere der Beginn einer Verlagerung aus einer Ruheposition, durch den Stellantrieb erreicht wird.

Des Weiteren betrifft die Erfindung ein Feldgerät einer prozesstechnischen Anlage, wie einer petrochemischen Anlage oder dergleichen. Das Feldgerät umfasst ein insbesondere oben beschriebenes erfindungsgemäßes Auf/Zu-Ventil, einen das Auf/Zu-Ventil zu betätigenden, pneumatischen Antrieb und einen i/p-Wandler, der im Normalbetrieb der Anlage eine pneumatische Arbeitskammer des Antriebs derart pneumatisch beaufschlagt, dass das Auf/Zu-Ventil in die eine der Auf/Zu-Stellungen verfährt. Im Falle einer bestimmten Betriebssituation, insbesondere in einem Notfall, entlüftet der i/p-Wandler die Arbeitskammer derart, dass das Auf/Zu-Ventil in die andere der Auf/Zu-Stellungen verfährt. Erfindungsgemäß ist das Feldgerät durch einen Drucksensor zum Erfassen des in der Arbeitskammer herrschenden pneumatischen Drucks und/oder des am i/p-Wandler abgegebenen pneumatischen Steuerdrucks kontinuierlich im Zeitverlauf ausgestattet. Des Weiteren hat das erfindungsgemäße Feldgerät eine Auswerteeinheit, die eine Druckänderung im zeitlichen Verlauf erfasst und den erfassten Druckänderungsverlauf dazu nutzt, eine physikalische Verfahrgröße, vorzugsweise die Stellung, die Verfahrzeit oder -dauer, den Stellweg oder dergleichen, des Auf/Zu-Ventils zu bestimmen. Mit der ermittelten Stellung kann eine Diagnose für die Funktionstüchtigkeit des Stellantriebs und/oder des Stellventils durchgeführt werden.

Vorzugsweise hat der pneumatische Stellantrieb einen Kraftspeicher, wie ein Luftpolster, eine Stellfeder oder dergleichen. Dabei sei angemerkt, dass das erfindungsgemäße Feldgerät auch für einen so genannten doppelt wirkenden Stellantrieb mit zwei pneumatisch beaufschlagbaren Stellkammern eingesetzt werden kann. Der Kraftspeicher kann in diesem Fall von einer der pneumatischen Arbeitskammern gebildet sein.

Vorzugsweise ist der Kraftspeicher vorgeladen, insbesondere die Stellfeder vorgespannt, und drängt das Auf/Zu-Ventil in der vorbestimmten Betriebssituation in die andere der Auf/Zu-Stellungen.

Bei einer bevorzugten Ausführung der Erfindung ist der Drucksensor außerhalb der Arbeitskammer des Stellantriebs benachbart dem Ausgang des i/p-Wandlers, insbesondere in einer die Arbeitskammer, mit dem Ausgang pneumatisch koppelnden Verbindungsleitung, angeordnet. Alternativ kann der Drucksensor auch innerhalb des Gehäuses, insbesondere in der Arbeitskammer des Stellantriebs angeordnet sein.

Bei einer bevorzugten Ausführung der Erfindung ist die Auswerteeinheit innerhalb eines an dem Gehäuse des Stellantriebs angeflanschten, vorzugsweise gekapselten, separaten Gehäuse angeordnet.

Bei einer besonders bevorzugten Ausführung der Erfindung ist das Feldgerät ohne eine direkte Erfassung der Position des Auf/Zu-Ventils ausgestattet. Dies bedeutet, dass keine Einrichtung am Feldgerät vorgesehen ist, welche ein direktes Abgreifen der Position eines Bauteils der Stellmechanik des Auf/Zu-Ventils oder des Stellantriebs vorsieht. Insbesondere ist kein Hall-Sensor verwendet.

Vorzugsweise führt die Auswerteeinheit eine Testsequenz aus, indem eine Partial-Stroke-Prozedur durchgeführt wird, um die Funktionsfähigkeit des Auf/Zu-Ventils zu überprüfen. Bei einer Partial-Stroke-Prozedur wird die Arbeitskammer des Stellantriebs nur teilweise entlüftet, um das Ventilglied nur einen Teil des Verfahrwegs aus der Ausgangsstellung zu verfahren und nicht vollständig schließen oder öffnen zu lassen. Das teilweise Verfahren wird anschließend über die Druckänderungssensierung innerhalb des pneumatischen Antriebs ermittelt.

Bei einer bevorzugten Ausführung der Erfindung besteht das erfindungsgemäße Feldgerät hinsichtlich Elektrokomponenten ausschließlich aus dem i/p-Wandler, aus dem Drucksensor, insbesondere zum Erzeugen eines den Druck repräsentierenden elektrischen Messsignals und einer Elektronik für die Auswerteeinheit. Nur ausnahmsweise könnte die Auswerteeinheit zusätzlich mit einem Regelungsalgorithmus oder Regler versehen sein, um abhängig von dem erfassten Drucksignal ein Stellungs-Nachregelungssignal zu erzeugen, um unter Umständen den pneumatischen Druck innerhalb der Arbeitskammer für die gewünschte Auf/Zu-Stellung zu verstärken oder zu schwächen. Dafür könnte auch ein direkter Positionssensor vorgesehen sein.

Weitere Eigenschaften, Vorteile und Merkmale der Erfindung werden durch die folgende Beschreibung einer bevorzugten Ausführung der Erfindung anhand der beiliegenden Zeichnungen deutlich, in denen zeigen:
- Figur 1: eine Prinzipskizze eines erfindungsgemäßen Feldgeräts;
- Figur 2: eine Grafik, in der der erfasste zeitliche Antriebsdruckverlauf dem zeitlichen Drehwinkelverlauf eines pneumatischen Schwenkantriebs gegenüber gestellt ist, wobei der pneumatische Schwenkantrieb belüftet wird; und
- Figur 3: eine Grafik, in der der zeitliche Antriebsdruckverlauf dem zeitlichen Drehwinkelverlauf beim Entlüften des pneumatischen Schwenkantriebs gegenüber gestellt ist.

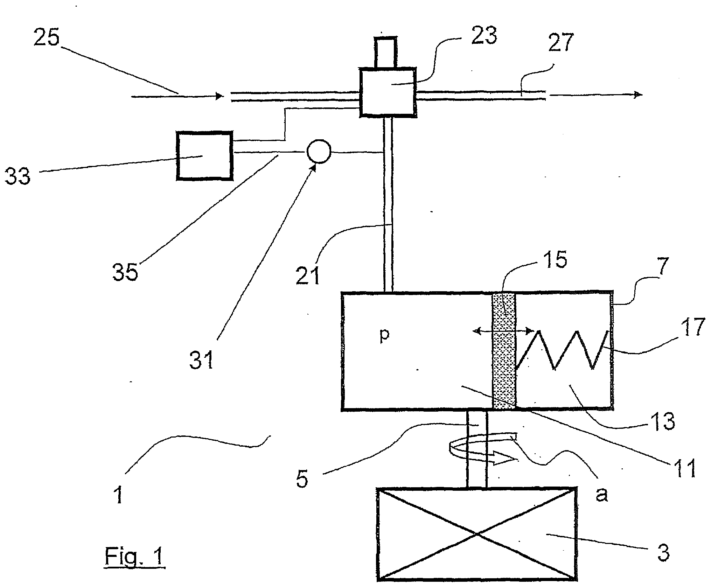

In Figur 1 ist ein erfindungsgemäßes Feldgerät im Allgemeinen mit der Bezugsziffer 1 versehen. Das einfache Feldgerät 1 hat eine Schwenkarmatur 3, die als ein Auf/Zu-Ventil ausgebildet ist. Die Schwenkarmatur 3 wird über eine Schwenkwelle 5 betätigt, welche durch einen pneumatischen Schwenkantrieb 7 schwenkbetätigt wird, was durch den Pfeil a angedeutet sein soll. Der pneumatische Antrieb 7 hat eine pneumatische Arbeitskammer 11, die von einer mechanischen Arbeitskammer 13 durch einen hin- und her verschieblichen Kolben 15 fluiddicht getrennt ist. In der mechanischen Arbeitskammer 13 ist eine Zwangsdruckfeder 17 angeordnet, welche den Kolben 15 in eine Sicherheitsposition zu drängen sucht, in der die Schwenkarmatur 3 in die Sicherheitsposition verfahren ist, um eine nicht näher dargestellte Anlagenprozessfluidleitung vollständig zu schließen.

An die Arbeitskammer 11 ist eine pneumatische Anschlussleitung 21 gekoppelt, die die pneumatische Arbeitskammer 11 mit einem Magnetventil 23, nämlich einem i/p-Wandler, verbindet. Das Magnetventil 23 ist an eine pneumatische Hilfsenergie 25, beispielsweise eine 6-bar-Luftdruckquelle, angeschlossen. An den i/p-Wandler ist eine Ausgangsleitung 27 angeschlossen, die auf Atmosphärendruck (1 bar) liegt.

In die Anschlussleitung 21 reicht ein pneumatischer Drucksensor 31, der den pneumatischen Druck innerhalb der Anschlussleitung 21 und damit in der Arbeitskammer 11 erfasst. Der Drucksensor 31 ist an einer Auswerteinrichtung 33 über eine elektrische Signalverbindung 35 gekoppelt. Die Auswerteinrichtung 33 umfasst ein gekapseltes Gehäuse, in dem Elektronikbauteile angeordnet sind. Die Elektronikbauteile können dazu ausgeführt sein, eine Regelungsroutine hinsichtlich der Stellung der Schwenkarmatur durchzuführen.

Im Folgenden wird die Funktionsweise des erfindungsgemäßen Feldgeräts 1 erläutert.

Im Normalbetrieb ist das Magnetventil 23 derart geschaltet, dass der pneumatische Betriebsdruck p innerhalb der pneumatischen Arbeitskammer 11 anliegt. Der pneumatische Betriebsdruck p veranlasst den Kolben 15 translatorisch zu verschieben, wodurch sich das Volumen der pneumatischen Arbeitskammer 11 vergrößert, während sich gleichzeitig das Volumen der auf Atmosphäre liegenden mechanischen Arbeitskammer 13 verringert. Gleichzeitig wird die Druckfeder 17 komprimiert. In einem Kräftegleichgewicht zwischen der Kompressionskraft der Druckfeder 17 und der pneumatischen Druckkraft in der pneumatischen Arbeitskammer 11, wird die vorbestimmte Auf-Stellung der Schwenkarmatur bei Normalbetrieb erreicht. Der pneumatische Druck wird von dem pneumatischen Drucksensor 31 dann als konstant erfasst. Im Falle einer Notsituation, die entweder aus Testgründen gewollt initiiert ist oder tatsächlich vorliegt, öffnet das Magnetventil 23 die Ausgangsleitung 27, wodurch die pneumatische Arbeitskammer 11 entlüftet wird. Während des Entlüftungsvorgangs wird die Druckänderung innerhalb der pneumatischen Anschlussleitung 21 durch den Drucksensor 31 im Zeitverlauf erfasst und in der Auswerteinrichtung 33 aufgezeichnet. Die Auswerteinrichtung 33 kann einen Speicher zum Speichern der erfassten Druckänderung aufweisen. Die Auswerteinrichtung 33 vergleicht die zeitliche Druckänderung mit einem vorab bestimmten Solldruckänderungsverlauf. Der Soll-Druckänderungsverlauf sind vorab bestimmte, insbesondere stellgerätspezifische Werte, die einen zeitlichen Druckänderungsverlauf beim Entlüften für ein richtig funktionierendes Feldgerät darstellen. Stimmt der tatsächliche, ermittelte Entlüftungsdruckverlauf mit dem Solldruckänderungsverlauf nicht überein, so kann davon ausgegangen werden, dass die Mechanik der Schwenkarmatur sowie des pneumatischen Antriebs nicht korrekt funktioniert. In diesem Fall könnte ein Fehlersignal ausgegeben werden, welches eine detaillierte mechanische Funktionsüberprüfung des Feldgeräts erfolgen lassen kann.

Auch zum Belüften der pneumatischen Arbeitskammer 11 kann ein erfindungsgemäßes Diagnoseverfahren mittels der Erfassung der zeitlichen Druckänderung durchgeführt werden. Hierzu wird die pneumatische Arbeitskammer 11 mit dem pneumatischen Betriebsdruck p beaufschlagt, was durch den Drucksensor im zeitlichen Verlauf erfasst wird. Der erfasste Druckänderungsverlauf kann wieder mit einem Solldruckänderungsverlauf für das Belüften des pneumatischen Schwenkantriebs verglichen werden. Fällt der Ist-Druckänderungsverlauf außerhalb eines Toleranzbereichs, so ist von einer Fehlfunktion insbesondere der Stellmechanik des pneumatischen Schwenkantriebs 7 auszugehen.

Es sei klar, dass die erfassten Druckwerte gleichzeitig einen Schluss auf die Stellung der Schwenkarmatur 3 erlauben können. Um unter Umständen eine bestimmte Stellung nachzuregeln, kann der gemessene Druckwert als Regelgröße verwendet werden.

Bei der in Figur 2 dargestellten Messung beginnt die Belüftungsphase nach etwa zwei, drei Sekunden, was durch den Knick der gestrichelten Antriebsdrucklinie bei t₁ leicht erkennbar ist. Nach dem Beginn der Belüftung steigt der Antriebsdruck stetig, insbesondere konstant (konstante Steigung), an. Bis zu dem Zeitpunkt t₂ reicht der Antriebsdruck noch nicht aus, um die Federkraft der Druckfeder 17 zu überwinden. Ab dem Zeitpunkt t₂ bringt der Antriebsdruck die Schwenkarmatur von der Zu-Stellung im Wesentlichen konstant allmählich in die Auf-Stellung, was durch den geradlinigen Verlauf der durchgehenden Drehwinkelkurve ersichtlich ist. Mit Abnahme des Drehwinkels ab dem Zeitpunkt t₂ nimmt die Steigung der Antriebsdruckkurve schlagartig bei t₂ ab, weil auch durch die Verlagerung des Kolbens 15 ein Druckaufbau in dem Maße wie bis t₂ nicht mehr möglich ist, als der Kolben 15 noch feststand. Zum Zeitpunkt t₃ erreicht die Schwenkarmatur 3 die Auf-Stellung, was durch den 0%ige Drehwinkelposition angedeutet ist. Zu diesem Zeitpunkt t₃ nimmt die Antriebsdrucksteigung wieder zu, weil sich das Volumen der pneumatischen Arbeitskammer 11 nicht mehr vergrößern kann.

Der in Figur 2 dargestellte Verlauf des Antriebsdrucks beim Belüften ist derart gerätecharakterisierend, dass er überraschenderweise dazu dienen kann, die Funktionsweise des Feldgeräts zu überprüfen. Sollte bei der Druckänderungserfassung eine unzulässige Abweichung, welche durch Erfahrungswerte bestimmbar ist, vorliegen, ist von einer Fehlfunktion des Feldgeräts auszugehen, was durch Ausgeben eines Fehlersignals angedeutet sein kann.

In Figur 3 ist nun der Antriebsdruckverlauf gegenüber dem Drehwinkelverlauf zum Zeitmaßstab beim Entlüften dargestellt. Auch hier treten die drei charakterisierenden Zeitpunkte t₁ bis t₃ auf.

Der Entlüftungsvorgang beginnt etwa nach 3 Sekunden, was durch den ersten Knick der strichlierten Antriebsdruckkurve ersichtlich ist. Beim stetigen Abbau des Antriebsdrucks auf 4 bar reicht die in der Druckfeder gespeicherte Federkraft noch nicht aus, um den Kolben 15 zu verlagern, weswegen der Drehwinkel bis 8 Sekunden bei 0 % verharrt. Erst bei Unterschreitung von etwa 3,5 bar zum Zeitpunkt t₂ (8 Sekunden) reicht die Federkraft der Druckfeder aus, um den Kolben 15 zu verschieben, was durch die stetig steigende Drehwinkelkurve ersichtlich ist. Gleichzeitig nimmt der Neigungsgrad der Antriebsdruckkurve ab, weil ein Druckabbau aufgrund der Verlagerung des Kolben nicht mehr im selben Maße möglich ist, wie bei einem feststehenden Kolben 15.
Im Augenblick, wenn der Kolben 15 in den Zustand gedrängt ist, in dem das Auf/Zu-Ventil in einer geschlossenen Position ist, ist der Drehwinkel 100 % erreicht, nämlich bei etwa 19 Sekunden. Aufgrund des nun feststehenden Kolbens 15 nimmt der Antriebsdruck wieder stärker ab.
Auch der Antriebsdruckverlauf, wie in Figur 3 dargestellt ist, stellt eine charakteristische, stellgerätspezifische Parameterskala dar, mit der die Funktionsweise des Feldgeräts überprüfbar ist. Aufgrund der klaren Zuordnung der Antriebsdruckänderungen zum Zeitpunkt t₁, t₂ und t₃ hinsichtlich der Drehwinkelposition, kann auch mittelbar eine eindeutige Aussage über die Stellung des Auf/Zu-Ventils getroffen werden.
Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein insoweit sie unter den Schutzumfang der Ansprüche fallen.

### Bezugszeichenliste

- 1: Feldgerät
- 3: Schwenkarmatur
- 5: Schwenkwelle
- 7: pneumatischer Schwenkantrieb
- 11: pneumatische Arbeitskammer
- 13: mechanische Arbeitskammer
- 15: Kolben
- 17: Zwangsdruckfeder
- 21: Anschlussleitung
- 23: Magnetventil
- 25: pneumatische Hilfsenergie
- 27: Ausgangsleitung
- 31: pneumatischer Drucksensor
- 33: Auswerteinrichtung
- 35: elektrische Signalverbindung
- a: Pfeil
- p: pneumatischer Betriebsdruck

## Patentansprüche

1. Verfahren zum Bestimmen der Stellung eines durch einen pneumatischen Stellantrieb (7) gestellten Auf/Zu-Ventils (3), das betriebsgemäß in eine vollständig geöffnete Auf-Stellung und eine geschlossene Zu-Stellung verfahrbar ist, wobei im Normalbetrieb des Stellantriebs (7) ein i/p-Wandler eine pneumatische Arbeitskammer (11) des Stellantriebs (7) derart pneumatisch beaufschlagt, dass das Auf/Zu-Ventil (3) in die eine der Auf/Zu-Stellungen verfährt, und im Falle einer vorbestimmten Betriebssituation, insbesondere in einem Notfall, der i/p-Wandler (23) die Arbeitskammer (11) entlüften lässt, so dass das Auf/Zu-Ventil (3) selbstständig in die andere der Auf/Zu-Stellungen verfährt, **dadurch gekennzeichnet, dass** der in der Arbeitskammer (11) herrschende pneumatische Druck und/oder der am i/p-Wandler (23) abgegebene pneumatische Steuerdruck kontinuierlich im Zeitverlauf erfasst und eine Druckänderung in dem Zeitverlauf ermittelt wird, auf deren Basis eine physikalische Verfahrgröße, wie die Stellung, die Verfahrzeit, der Stellweg oder dergleichen, des Auf/Zu-Ventils bestimmt wird, wobei eine Diagnose auf Funktion einer Bewegungsmimik des Auf/Zu-Ventils (3) initiiert wird, indem der erfasste Ist-Druckänderungsverlauf mit einem Soll-Druckänderungsverlauf verglichen wird.

2. Verfahren nach Anspruch 1, **dadurch gekennzeichnet, dass** das Erfassen des pneumatischen Drucks (p) in der pneumatischen Arbeitskammer (11) und/oder des Steuerdrucks (p) dann initiiert wird, wenn eine Druckänderung eines innerhalb der pneumatischen Arbeitskammer (11) konstant herrschenden Drucks erfasst wird.

3. Verfahren nach einem der vorstehenden Ansprüche, **dadurch gekennzeichnet, dass** anhand der Druckänderung die Stellungsänderung, insbesondere die Momentanstellung je Zeiteinheit, des Auf/Zu-Ventils hergeleitet wird, wobei insbesondere vorher die erfasste Druckänderung daraufhin geprüft wird, ob sie sich innerhalb einer vorbestimmten Abweichungstoleranz in Bezug auf einen auf insbesondere gespeicherten Erfahrungswerten basierenden Soll-Druckverlauf befindet oder nicht, und falls sich die erfasste Druckänderung innerhalb der Abweichungstoleranz befindet, die Herleitung der Stellungsänderung des Auf/Zu-Ventils (3) durchgeführt wird.

4. Verfahren nach einem der vorstehenden Ansprüche, **dadurch gekennzeichnet, dass** es ohne eine direkte Positionserfassung des Auf/Zu-Ventils (3), beispielsweise ohne eine Einrichtung zum Abgreifen der Positionsänderung eines Bauteils der Stellmechanik durchgeführt wird.

5. Verfahren nach einem der vorstehenden Ansprüche, **dadurch gekennzeichnet, dass** ein vom Normalbetrieb und der vorbestimmten Betriebsposition unabhängiges Testsignal dem i/p-Wandler (23) mitgeteilt wird, das eine Teilverlagerung des Auf/Zu-Ventils (3) von der einen in die andere Auf/Zu-Stellung und wieder zurück in die eine Ausgangsstellung veranlasst, um insbesondere die Funktionstüchtigkeit des Auf/Zu-Ventils (3) zu überprüfen.

6. Verfahren nach einem der vorstehenden Ansprüche, dadurch **gekennzeichne**t, dass anhand der ermittelten Druckänderung im Zeitverlauf die Druckänderung nach der Zeit abgeleitet wird, um insbesondere einen Betriebspunkt oder optimalen Arbeitsbereich des pneumatischen Stellantriebs (7) zu bestimmen.

7. Feldgerät einer prozesstechnischen Anlage umfassend: ein Auf/Zu-Ventil (3), einen das Auf/Zu-Ventil (3) betätigenden, pneumatischen Stellantrieb (7) und einen i/p-Wandler (23), der im Normalbetrieb der Anlage eine pneumatische Arbeitskammer (11) des Stellantriebs (7) derart pneumatisch beaufschlagt, dass das Auf/Zu-Ventil (3) in eine der Auf/Zu-Stellungen verfährt, und im Falle einer vorbestimmten Betriebssituation, insbesondere in einem Notfall, der i/p-Wandler (23) die Arbeitskammer (11) entlüftet, so dass das Auf/Zu-Ventil in die andere der Auf/Zu-Stellungen verfährt, **gekennzeichnet durch** einen Drucksensor (31) zum Erfassen des in der Arbeitskammer (11) herrschenden pneumatischen Arbeitsdrucks (p) und/oder des am i/p-Wandler (23) abgegebenen pneumatischen Steuerdrucks (p) kontinuierlich im Zeitverlauf und eine Auswerteeinheit (33), die derart ausgebildet ist, dass sie anhand einer erfassten Druckänderung im zeitlichen Verlauf sowie anhand von Druckänderungs-Erfahrungswerten eine physikalische Verfahrgröße, wie die Stellung, die Verfahrzeit, der Stellweg oder dergleichen, des Auf/Zu-Ventils (3) bestimmt und eine Diagnose auf Funktion einer Bewegungsmimik des Auf/Zu-Ventils (3) initiiert, indem der erfasste Ist-Druckänderungsverlauf mit einem Soll-Druckänderungsverlauf verglichen wird.

8. Feldgerät (1) nach Anspruch 7, **dadurch gekennzeichnet, dass** der Stellantrieb (7) einen Kraftspeicher, wie ein Luftpolster, eine Stellfeder (17), oder dergleichen, aufweist, der im Normalbetrieb vorgeladen, insbesondere vorgespannt, ist und das Auf/Zu-Ventil (3) in der vorbestimmten Betriebssituation in die andere der Auf/Zu-Stellungen drängt.

9. Feldgerät (1) nach Anspruch 7 oder 8, **dadurch gekennzeichnet, dass** der Drucksensor (31) außerhalb der pneumatischen Arbeitskammer (11) des Antriebs (7) benachbart dem Ausgang des i/p-Wandlers (23), insbesondere in einer die Arbeitskammer (11) mit dem Ausgang pneumatisch koppelnden Verbindungsleitung (21), angeordnet ist.

10. Feldgerät (1) nach einem der Ansprüche 7 bis 9, **dadurch gekennzeichnet, dass** es ohne direkte Erfassung der Position des Auf/Zu-Ventils (3), insbesondere ohne eine Einrichtung zum direkten Abgreifen der Position eines Bauteils der Stellmechanik des Auf/Zu-Ventils (3) oder des Stellantriebs (7), ausgestattet ist.

11. Feldgerät (1) nach einem der Ansprüche 7 bis 10, **dadurch gekennzeichnet, dass** die Auswerteeinheit (33) dazu ausgelegt ist, eine Partial-Stroke-Prozedur durchzuführen, um die Funktionsfähigkeit des Auf/Zu-Ventils zu überprüfen.

12. Feldgerät (1) nach einem der Ansprüche 7 bis 11, **dadurch gekennzeichnet, dass** es hinsichtlich Elektronikkomponenten ausschließlich aus dem i/p-Wandler, dem Drucksensor insbesondere zum Erzeugen eines elektrischen Drucksignals und der Auswerteeinheit besteht.

## Claims

1. Method for determining a position of an open/closed-valve (3) positioned by a pneumatic actuating drive (7) being operation-accordingly movable to a completely opened open position and a closed position, wherein during normal operation of the actuating drive (7) an i/p-converter pneumatically impinges on a pneumatic working chamber (11) of the actuating drive (7) such that the open/closed-valve (3) moves to one of the open/closed positions and, in the case of a predefined operating condition, in particular an emergency situation, the i/p-converter (23) allows the working chamber (11) to vent so that the open/closed-valve (3) autonomously moves to the other one of the open/closed positions, **characterised in that** the pressure prevailing in the working chamber (11) and/or the pneumatic control pressure outputted at the i/p converter (23) is captured continuously over time and a pressure change is determined over time, on the basis of which a physical operational variable of the open/closed-valve (3), such as the position, the displacement time, the travel distance or the like, is determined, wherein a diagnosis regarding function of a motion mimicry of the open/closed-valve (3) is initiated, by comparing the captured actual pattern of the pressure change to an expected pressure pattern.

2. Method according to claim 1, **characterised in that** the capturing of the pneumatic pressure (p) in the pneumatic working chamber (11) and/or of the control pressure (p) is initiated when a change of a constant pressure prevailing inside the pneumatic working chamber (11) is captured.

3. Method according to one of the preceding claims, **characterised in that**, based on the pressure change, the position change, in particular the momentary position per unit time of the open/closed-valve is derived, wherein, in particular beforehand, the captured pressure change is checked as to whether or not it is within a predetermined tolerance of deviation with respect to an expected pressure pattern based on in particular stored empirical values, and, in case that the captured pressure change is within the deviation tolerance, the derivation of the position change of the open/closed-valve (3) is performed.

4. Method according to one of the preceding claims, **characterised in that** it is executed without directly capturing the position of the open/closed-valve (3), for example without having a device for sensing the position change on a component of the actuation mechanism.

5. Method according to one of the preceding claims, **characterised in that** a test signal independent from the normal operation and from the predetermined operating position is transmitted to the i/p-converter (23), inducing a partial movement of the open/closed-valve (3) from the one to the other open/closed position and back to the one initial position in order to check in particular the proper functioning of the open/closed-valve (3).

6. Method according to one of the preceding claims, **characterised in that** on the basis of the determined pressure change over time the pressure change is derived with respect to time in order to determine in particular an operating point or optimum working range of the pneumatic actuating drive (7).

7. Field device of a technical process plant, comprising: an open/closed-valve (3), a pneumatic actuating drive (7) actuating the open/closed-valve (3), and an i/p-converter (23) that, during normal operation of the plant, pneumatically impinges on a pneumatic working chamber (11) of the actuating drive (7) in such a way, that the open/closed-valve (3) moves to one of the open/closed positions and, in the case of a predetermined operating condition, in particular an emergency situation, the i/p-converter (23) vents the working chamber (11) so that the open/closed-valve (3) moves to the other one of the open/closed positions, **characterised by** a pressure sensor (31) for capturing continuously over time the pneumatic working pressure (p) prevailing in the working chamber (11) and/or the pneumatic control pressure outputted at the i/p-converter (23), and by an analysis unit (33) being designed in such a way to determining, on the basis of both, on a captured change in pressure over time and on empirical pressure change values, a physical motion variable, such as the position, the displacement time, the travel distance or the like, of the open/closed-valve (3) and a diagnosis regarding function of a motion mimicry of the open/closed-valve (3) is initiated, by comparing the captured actual pattern of the pressure change to an expected pressure pattern.

8. Field device (1) according to claim 7, **characterised in that** the actuating drive (7) has a force accumulator, such as an air cushion, an actuating spring (17) or the like that is preloaded, in particular pre-tensioned during normal operation and pushes the open/closed-valve (3), being in the predetermined operating condition, to the other one of the open/closed positions.

9. Field device (1) according to claim 7 or 8, **characterised in that** the pressure sensor (31) is arranged outside the pneumatic working chamber (11) of the drive (7), adjacent to the output of the i/p-converter (23), in particular in a connecting duct (21) coupling the working chamber (11) to the output.

10. Field device (1) according to one of the claims 7 to 9, **characterised in that** it does not directly capture the position of the open/closed-valve (3), in particular is not provided with a device for directly sensing the position of a component of the actuation mechanism of the open/closed-valve (3) or the actuating drive (7).

11. Field device (1) according to one of the claims 7 to 10, **characterised in that** the analysis unit (33) is designed to perform a partial-stroke-procedure in order to check the functionality of the open/closed-valve.

12. Field device (1) according to one of the claims 7 to 11, **characterised in that** with respect to electronic components, it exclusively consists of the i/p-converter, the pressure sensor in particular for generating an electric pressure signal, and the analysis unit.

## Revendications

1. Procédé de définition de la position d'une soupape d'ouverture/de fermeture (3) réglée par une commande de réglage pneumatique (7) qui peut être passée conformément à son fonctionnement dans une position d'ouverture complètement ouverte et une position de fermeture fermée, dans lequel, en fonctionnement normal de la commande de réglage (7), un convertisseur I/P sollicite une chambre fonctionnelle pneumatique (11) de la commande de réglage (7) par système pneumatique de manière à ce que la soupape d'ouverture/de fermeture (3) passe dans une des positions d'ouverture/de fermeture et, dans le cas d'une situation de fonctionnement prédéfinie, en particulier en cas d'urgence, le convertisseur I/P (23) fasse purger la chambre fonctionnelle (11) de manière à ce que la soupape d'ouverture/de fermeture (3) passe automatiquement dans l'autre des positions d'ouverture/de fermeture, **caractérisé en ce que** la pression pneumatique régnant dans la chambre fonctionnelle (11) et/ou la pression de commande pneumatique délivrée dans le convertisseur I/P (23) soient détectées en continu dans le cycle temporel et que soit déterminée dans le cycle temporel une modification de pression sur la base de laquelle un paramètre physique de déplacement, comme la position, la durée de déplacement, la course de réglage ou similaire de la soupape d'ouverture/de fermeture soit défini, un diagnostic de fonctionnement d'une mimique de mouvement de la soupape d'ouverture/de fermeture (3) étant initié par le fait que l'évolution de la modification de pression réelle détectée est comparée à une évolution de modification de pression théorique.

2. Procédé selon la revendication 1, **caractérisé en ce que** la détection de la pression pneumatique (p) dans la chambre fonctionnelle pneumatique (11) et/ou de la pression de commande (p) est initiée lorsqu'une modification de pression d'une pression régnant de manière permanente dans la chambre fonctionnelle pneumatique (11) est détectée.

3. Procédé selon une des revendications précédentes, **caractérisé en ce que**, à partir de la modification de pression, la modification de position, en particulier la position momentanée par unité temporelle, de la soupape d'ouverture/de fermeture est déduite, la modification de pression détectée étant en particulier précédemment contrôlée pour savoir si elle se trouve dans une tolérance d'écart prédéfinie par rapport à une évolution de pression théorique basée en particulier sur des valeurs d'expérience en particulier sauvegardées ou pas et, si la modification détectée se trouve dans la tolérance d'écart, la déduction de la modification de position de la soupape d'ouverture/de fermeture (3) est réalisée.

4. Procédé selon une des revendications précédentes, **caractérisé en ce qu'**il est réalisé sans détection directe de la position de la soupape d'ouverture/de fermeture (3), en particulier sans dispositif de mesure de la modification de position du mécanisme de réglage.

5. Procédé selon une des revendications précédentes, **caractérisé en ce qu'**un signal de test indépendant du fonctionnement normal et de la position de fonctionnement prédéfinie est communiqué au convertisseur I/P (23) qui occasionne un passage partiel de la soupape d'ouverture/de fermeture (3) de l'une à l'autre position d'ouverture/de fermeture et retour dans une position initiale afin en particulier de vérifier la fonctionnalité de la soupape d'ouverture/de fermeture (3).

6. Procédé selon une des revendications précédentes, **caractérisé en ce que**, à partir de la modification de pression déterminée dans le cycle temporel, la modification de pression après la période est déduite afin en particulier de définir un point de fonctionnement ou une plage fonctionnelle optimale de la commande de réglage pneumatique (7).

7. Appareil de champ d'une installation technique de traitement comprenant : une soupape d'ouverture/de fermeture (3), une commande de réglage pneumatique (7) actionnant la soupape d'ouverture/de fermeture (3) et un convertisseur I/P (23) qui, en fonctionnement normal de l'installation, sollicite une chambre fonctionnelle pneumatique (11) de la commande de réglage (7) par système pneumatique de manière à ce que la soupape d'ouverture/de fermeture (3) passe dans une des positions d'ouverture/de fermeture et, dans le cas d'une situation de fonctionnement prédéfinie, en particulier en cas d'urgence, le convertisseur I/P (23) purge la chambre fonctionnelle (11) de manière à ce que la soupape d'ouverture/de fermeture (3) passe automatiquement dans l'autre des positions d'ouverture/de fermeture, **caractérisé par** un capteur de pression (31) pour détecter la pression pneumatique régnant dans la chambre fonctionnelle (11) et/ou la pression de commande pneumatique délivrée dans le convertisseur I/P (23) en continu dans le cycle temporel et une unité d'exploitation (33) qui est conçue pour définir, à partir de la modification de pression détectée dans le cycle temporel et, à partir de valeurs d'expérience de modification de pression, une valeur physique de déplacement, comme la position, la durée de déplacement, la course de réglage ou similaire de la soupape d'ouverture/de fermeture (3) et initier un diagnostic de fonctionnement d'une mimique de mouvement de la soupape d'ouverture/de fermeture (3) par le fait que l'évolution de la modification de pression réelle détectée est comparée à une évolution de modification de pression théorique.

8. Appareil de champ (1) selon la revendication 7, **caractérisé en ce que** la commande de réglage (7) présente un accumulateur de force, comme un coussin d'air, un ressort de réglage (17) ou similaire, qui est préchargé, en particulier précontraint, en fonctionnement normal et pousse la soupape d'ouverture/de fermeture (3), dans la situation de fonctionnement prédéfini, dans l'autre des positions d'ouverture/de fermeture.

9. Appareil de champ (1) selon la revendication 7 ou 8, **caractérisé en ce que** le capteur de pression (31) est disposé en dehors de la chambre fonctionnelle pneumatique (11) de la commande (7), à proximité de la sortie du convertisseur I/P (23), en particulier dans une conduite de liaison (21) couplant la chambre fonctionnelle (11) à la sortie par système pneumatique.

10. Appareil de champ (1) selon une des revendications 7 à 9, **caractérisé en ce qu'**il est équipé sans détection directe de la position de la soupape d'ouverture/de fermeture (3), en particulier sans dispositif de mesure directe de la position d'une pièce du mécanisme de réglage de la soupape d'ouverture/de fermeture (3) ou de la commande de réglage (7).

11. Appareil de champ (1) selon une des revendications 7 à 10, **caractérisé en ce que** l'unité d'exploitation (33) est conçue pour réaliser une procédure de course partielle afin de contrôler la fonctionnalité de la soupape d'ouverture/de fermeture.

12. Appareil de champ (1) selon une des revendications 7 à 11, **caractérisé en ce qu'**il est composé exclusivement, en ce qui concerne les composants électroniques, du convertisseur I/P, du capteur de pression, en particulier pour la génération d'un signal de pression électrique, et de l'unité d'exploitation.
